# EUROPEAN PATENT SPECIFICATION

(11) **EP 3 684 882 B1**
(45) Date of publication and mention of the grant of the patent: **17.03.2021**
(21) Application number: 18799932.1
(22) Date of filing: 17.10.2018
(51) Int. Cl.: C09K 11/02, B82Y 30/00

(54) **GLASS FIBER COMPOSITE QUANTUM DOT FILM**
QUANTENPUNKTFILM AUS GLASFASERVERBUNDWERKSTOFF
FILM EN COMPOSITE DE FIBRES DE VERRE POURVU DE POINTS QUANTIQUES

(30) Priority: 17.10.2017 US 201762573219 P
(43) Date of publication of application: 29.07.2020
(73) Proprietor: SHPP Global Technologies B.V., 4612 PX Bergen op Zoom (NL)
(72) Inventor: ZHOU, Hao, Mt. Vernon IN 47620 (US); LEE, Jong, Woo, Suwon-si Gyeonggi-do 440-746 (KR); HYUN, Soonyoung, Suwon-si Gyeonggi-do 440-746 (KR)
(74) Representative: Dehns
(86) International application number: PCT/US2018/056193
(87) International publication number: WO 2019/079376

(56) References cited:
- US-A1- 2003 066 998
- US-A1- 2016 251 227
- US-A1- 2017 162 764

## Description

### TECHNICAL FIELD

The present disclosure relates to the field of quantum dot-containing film compositions.

### BACKGROUND

Quantum dot (QD) compositions have a variety of uses, in particular uses in display technologies. One challenge to achieving improved performance in a display application is to have well-dispersed QDs in the composition, as aggregated QDs lead to decreased device performance.

To prevent aggregation and to stabilize the QDs, at present, QDs are passivated by using organic or inorganic layers. Such layers, however, may adversely affect the dispersion of the stabilized QDs in the polymer matrix. Aggregated QDs can be indirectly observed when one compares the peak wavelength of the QD itself to the peak wavelength of a QD film. If aggregation occurs, usually the peak wavelength of QD emission light is shifted to a longer wavelength. Although the peak red shift of a standard QD film as compared with pure QDs is only around 3 nanometers (nm) to 4 nm, the peak red shift of stabilized QD film is more than 10 nm, which in turn suggests that the stabilized QDs tend to be more severely aggregated. Further, in the case of aggregated QDs, emission from a nearby QD may be reabsorbed to an adjacent QD, which in turn causes energy loss and subsequently reduces the overall quantum yield (QY).

US2017162764A1 concerns a display device with a QD film. The QD film comprises core-shell QDs, a hydrophobic barrier layer surrounding the shell, and a matrix material configured to house the QD, said matrix material optionally comprising glass beads.

Accordingly, there is a need in the art for QD compositions that feature minimal QD aggregation. The value of such compositions would be greatly enhanced if such compositions could be formed into films via extrusion or other well-characterized industrial processes.

### SUMMARY

In meeting the long-felt needs described above, the present disclosure provides optical compositions, comprising: a polymeric matrix material; a population of quantum dots dispersed within the polymeric matrix material; and a population of glass fiber segments dispersed within the polymeric matrix material, the glass fiber segments effecting reduced aggregation between the quantum dots.

Also provided are methods, comprising forming a film by extruding an optical composition according to the present disclosure.

Further provided are display devices, comprising an optical composition according to the present disclosure.

### BRIEF DESCRIPTION OF THE DRAWINGS

The above-mentioned and other features and advantages of this disclosure, and the manner of attaining them, will become apparent and be better understood by reference to the following description of one example of the disclosure in conjunction with the accompanying drawings, wherein:

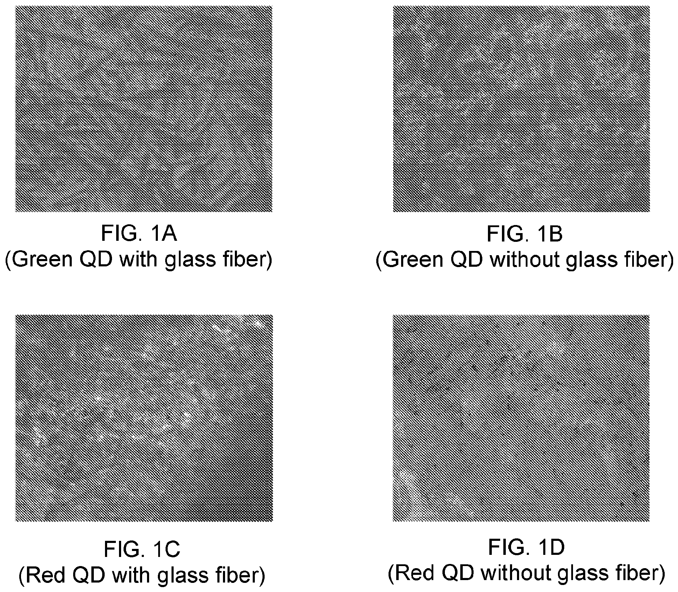

FIGS. 1A-1D are images of red or green quantum dot films with and without glass fiber filler.

### DETAILED DESCRIPTION OF ILLUSTRATIVE EMBODIMENTS

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.
Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification. All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to a mixture including "a quantum dot" includes mixtures of two or more quantum dots.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ± 10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional additives" means that the additional additives can or cannot be included and that the description includes compositions that both include and do not include additional additives.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Overview

The degree of QD dispersion in an extruded QD film relates strongly to achieving a highly efficient film. As described elsewhere herein, air- and heat-stable QDs are generally passivated by application of organic or inorganic layers that reduce the dispersion of QDs in the matrix. One may normally control the dispersion of passivated QDs in the matrix by introducing organic ligands that are matched with matrix polymer. But even in a well-dispersed embodiment, the aggregation of QDs can shift peak wave length of emission light to longer wave lengths and as a consequence reduce the quantum yield.

The present disclosure provides a technique to enhance the dispersion of passivated QDs in a matrix via using the physical means of incorporating chopped glass fiber into the matrix. Passivation may stabilize and prevent aggregation of the quantum dots. Without being bound to any particular theory, chopped glass fiber can be rearranged by the melt resin flow direction during a film extrusion process, and this melt flow improves the dispersion of the QDs in the matrix material. Furthermore - and without being bound to any particular theory - the bulk aggregation of chopped glass fiber may act as scattering source, thus reducing or even eliminating the need for scattering beads to enhance quantum yield (QY).

In one aspect, the present disclosure provides QD-containing films made via an extrusion process, which films may include air- and heat-stable QDs as well as glass fiber incorporated into a thermoplastic polymer matrix. In some embodiments, the glass fiber content is in the range of from about 1 to about 40 wt% (measured against the total weight of the film sample). A variety of thermoplastic polymers may be used as matrix materials, e.g., polycarbonate (PC), polymethyl methacrylate (PMMA), and polystyrene (PS).

In one exemplary film extrusion process, chopped glass fiber may be aligned with the direction of melt polymer flow. This may be accomplished by the natural flow profile of the extrusion product in the extruder. Without being bound by any particular theory, this arrangement of glass fiber enhances dispersion of QDs within the matrix material. By modulating the presence of a dispersion agent and/or by utilizing chopped glass fiber (which may include a surface treatment of its own), the composite morphology of the QD-containing extruded film may be controlled

The mechanical properties of a film according to the present disclosure are superior to a bare matrix polymer film in terms of coefficient of thermal expansion (CTE), strength, and/or hardness. As explained elsewhere herein, chopped glass fiber may act as a scattering source, which may in turn reduce the need for the inclusion of other scattering beads such as TiO₂ and/or SiO₂ beads, as such beads may not be needed to increase luminance. In addition, the haze level of film can be adjusted by modulating the glass fiber content and the matrix polymer used in the film.

### Quantum Dots

In some aspects the plurality of stabilized quantum dots include red quantum dots and green quantum dots. A quantum dot film according to the present disclosure may optionally include texturing on one or both surfaces of the quantum dot film.

In some embodiments, the disclosed compositions include stabilized QDs. In some aspects, the plurality of stabilized quantum dots are thermally stabilized, air stabilized, moisture stabilized and/or flux stabilized, as described in further detail herein. The inclusion of stabilized quantum dots in the quantum dot film may allow the barrier layer(s) (protective layers) found in conventional quantum dot films to be eliminated, resulting in a quantum dot film that has improved optical properties as compared to conventional quantum dot films that include one or more barrier layers. In addition, elimination of the barrier layer(s) allows for formation and use of a thinner quantum dot film. Thinner quantum dot films are more useful in various applications, including display applications as discussed further herein.

The plurality of stabilized quantum dots may be stabilized in any suitable manner. In some aspects, the plurality of stabilized quantum dots may be stabilized by providing an encapsulation around each of the plurality of stabilized quantum dots, the encapsulation including an organic material or an inorganic material. The encapsulation protects the stabilized quantum dot from damage in the same manner that a barrier layer(s) would protect the quantum dot layer in a conventional quantum dot film.

In certain aspects each of the plurality of stabilized quantum dots may include a plurality of ligands having a length of about 5 nanometers (nm) to about 200 nm, for example, from about 10 nm to about 180 nm, from about 20 to about 170 nm, from about 30 to about 150 nm, from about 50 to about 140 nm, from about 60 to about 130 nm, from about 70 to about 120 nm, from about 80 to about 110 nm, or even from about 90 to about 100 nm. The plurality of ligands may include any ligand type that will interact with (for example, attach and/or coordinate) to the quantum dot. The plurality of ligands protect the quantum dot from damage.

Exemplary ligands include, e.g., thiol ligands. Other exemplary ligands include, e.g., organic ligands having the form RCOOH, RNH₂, R₂NH, R₃N, RSH, R₃PO, R₃P, ROH, RCOOR', RPO(OH)₂, R₂POOH, RCOOCOR', and a combination thereof, wherein, each R and R' are independently a substituted or unsubstituted C1 to C24 aliphatic hydrocarbon group such as an alkyl group, an alkenyl group, or an alkynyl group, or a substituted or unsubstituted C5 to C24 aromatic hydrocarbon group, such as an aryl group.

Specific examples of an organic ligand compound may include methane thiol, ethane thiol, propane thiol, butane thiol, pentane thiol, hexane thiol, octane thiol, dodecane thiol, hexadecane thiol, octadecane thiol, benzyl thiol; methane amine, ethane amine, propane amine, butane amine, pentane amine, hexane amine, octane amine, dodecane amine, hexadecyl amine, octadecyl amine, dimethyl amine, diethyl amine, dipropyl amine, oleylamine, methanoic acid, ethanoic acid, propanoic acid, butanoic acid, pentanoic acid, hexanoic acid, heptanoic acid, octanoic acid, dodecanoic acid, hexadecanoic acid, octadecanoic acid, oleic acid, benzoic acid, palmitic acid, stearic acid; a phosphine such as methyl phosphine, ethyl phosphine, propyl phosphine, butyl phosphine, pentyl phosphine, tributylphosphine, or trioctylphosphine; a phosphine compound or an oxide compound thereof such as methyl phosphine oxide, ethyl phosphine oxide, propyl phosphine oxide, butyl phosphine oxide, or trioctylphosphine oxide; diphenyl phosphine, triphenyl phosphine or an oxide compound thereof; phosphonic acid, and the like, but are not limited thereto.

The organic ligand compound may be used alone or as a mixture of two or more organic ligands. In some embodiments, the quantum dot does not include an amine organic ligand having an alkyl group of at least 6 carbon atoms, such as at least 8 carbon atoms (e.g., n-octyl amine).

In further aspects each of the plurality of stabilized quantum dots include a shell having a thickness of about 1 to about 20 nm. In other aspects each of the plurality of quantum dots include a multi-shell structure, such as but not limited to a first shell including a first material and at least a second shell including a second material that may be the same or different than the first material. The plurality of stabilized quantum dots in these aspects may have a core that is of the same or a different material than the shell or multi-shell structure material(s).

In yet further aspects, each of the plurality of stabilized quantum dots include a concentration-gradient quantum dot. A concentration-gradient quantum dot includes an alloy of at least two semiconductors. The concentration (molar ratio) of the first semiconductor gradually increases from the core of the quantum dot to the outer surface of the quantum dot, and the concentration (molar ratio) of the second semiconductor gradually decreases from the core of the quantum dot to the outer surface of the quantum dot. Exemplary concentration-gradient quantum dots are described in, e.g., U.S. Patent No. 7,981,667, the disclosure of which is incorporated herein by reference in its entirety.

In one aspect, the concentration-gradient quantum dot includes two semiconductors, a first semiconductor having the formula

CdₓZn₁₋ₓS_{y}Se_{1-y}

and a maximum molar ratio at the core of the stabilized quantum dot that gradually decreases to a minimum molar ratio at the outer surface of the quantum dot and a second semiconductor having the formula

Zn_{z}Se_{1-z}SwSe_{1-w}

and a maximum molar ratio at the outer surface of the stabilized quantum dot that gradually decreases to a minimum molar ratio at the core of the stabilized quantum dot.

In another aspect, the concentration-gradient quantum dot includes two semiconductors, a first semiconductor having the formula

CdZnₓS₁₋ₓ

and a maximum molar ratio at the core of the stabilized quantum dot that gradually decreases to a minimum molar ratio at the outer surface of the quantum dot and a second semiconductor having the formula

ZnCd_{z}S_{1-z}

and a maximum molar ratio at the outer surface of the stabilized quantum dot that gradually decreases to a minimum molar ratio at the core of the stabilized quantum dot.

Exemplary quantum dots (QDs) according to aspects of the disclosure may include, but are not limited to, semiconductor nanocrystals selected from the group consisting of, but not limited to, Group II-VI semiconductor compounds, Group II-V semiconductor compounds, Group III-VI semiconductor compounds, Group III-V semiconductor compounds, Group IV-VI semiconductor compounds, Group II-III-VI compounds, Group II-IV-VI compounds, Group II-IV-V compounds, alloys thereof and combinations thereof.

Exemplary Group II elements include zinc Zn, cadmium Cd, mercury Hg or a combination thereof.

Exemplary Group III elements include aluminum Al, gallium Ga, indium In, titanium Ti or a combination thereof.

Exemplary Group IV elements include silicon Si, germanium Ge, tin Sn, lead Pb or a combination thereof.

Exemplary Group V elements include phosphorus P, arsenic As, antimony Sb, bismuth Bi or a combination thereof.

Exemplary Group VI elements include oxygen O, sulfur S, selenium Se, tellurium Te or a combination thereof.

Exemplary Group II-VI semiconductor compounds include binary compounds, e.g., cadmium selenide CdSe, cadmium telluride CdTe, zinc sulfide ZnS, zinc selenide ZnSe, zinc telluride ZnTe, zinc oxide ZnO, mercury sulfide HgS, mercury selenide HgSe and mercury selenide HgTe; ternary compounds, e.g., zinc selenide sulfide CdSeS, cadmium selenide telluride CdSeTe, cadmium sulfide telluride CdSTe, zinc selenide sulfide ZnSeS, zinc selenide telluride ZnSeTe, zinc sulfide telluride ZnSTe, mercury selenide sulfide HgSeS, mercury selenide telluride HgSeTe, mercury sulfide telluride HgSTe, cadmium zinc sulfide CdZnS, cadmium zinc selenide CdZnSe, cadmium zinc telluride CdZnTe, cadmium mercury sulfide CdHgS, cadmium mercury selenide CdHgSe, cadmium mercury telluride CdHgTe, mercury zinc sulfide HgZnS and mercury zinc selenide HgZnSe; and quaternary compounds, e.g., cadmium zinc selenide sulfide CdZnSeS, cadmium zinc selenide telluride CdZnSeTe, cadmium zinc sulfide telluride CdZnSTe, cadmium mercury selenide sulfide CdHgSeS, cadmium mercury selenide telluride CdHgSeTe, cadmium mercury sulfide telluride CdHgSTe, mercury zinc selenide sulfide HgZnSeS, mercury zinc selenide telluride HgZnSeTe and mercury zinc sulfide telluride HgZnSTe.

Exemplary Group III-V semiconductor compounds include binary compounds, for example gallium nitride GaN, gallium phosphide GaP, gallium arsenide GaAs, gallium antimonide GaSb, aluminum nitride A1N, aluminum phosphide A1P, aluminum arsenide AlAs, aluminum antimonide AlSb, indium nitride InN, indium phosphide InP, indium arsenide InAs and indium antimonide InSb; ternary compounds, for example, gallium nitride phosphide GaNP, gallium nitride arsenide GaNAs, gallium nitride antimonide GaNSb, gallium phosphide arsenide GaPAs, gallium phosphide antimonide GaPSb, aluminum nitride phosphide A1NP, aluminum nitride arsenide AINAs, aluminum nitride antimonide AINSb, aluminum phosphide arsenide A1PAs, aluminum phosphide antimonide AlPSb, indium nitride phosphide InNP, indium nitride arsenide InNAs, indium nitride antimonide InN Sb, indium phosphide arsenide InPAs, indium lead antimonide InPSb, gallium aluminum nitride phosphide GaA1NP, aluminum gallium nitride AlGaN, aluminum gallium phosphide AlGaP, aluminum gallium arsenide AlGaAs, aluminum gallium antimonide AlGaSb, indium gallium nitride InGaN, indium gallium phosphide InGaP, indium gallium arsenide InGaAs, indium gallium antimonide InGaSb, aluminum indium nitride AlInN, aluminum indium phosphide AlInP, aluminum indium arsenide AlInAs and AlInSb; and quaternary compounds, for example., gallium aluminum nitride arsenide GaA1NAs, gallium aluminum nitride antimonide GaA1NSb, gallium aluminum phosphide arsenide GaAlPAs, gallium aluminum phosphide antimonide GaAlPSb, gallium indium nitride phosphide GaInNP, gallium indium nitride arsenide GaInNAs,gallium indium nitride antimonide GaInNSb, gallium indium phosphide arsenide GaInPAs, gallium indium phosphide antimonide GaInPSb, Indium aluminum nitride phosphide InA1NP, indium aluminum nitride arsenide InA1NAs, indium aluminum nitride antimonide InA1NSb, indium aluminum phosphide arsenide InA1PAs and indium aluminum phosphide antimony InA1PSb.

Exemplary Group IV-VI semiconductor compounds include binary compounds, for example, tin sulfide SnS, tin selenide SnSe, tin telluride SnTe, lead sulfide PbS, lead selenide PbSe and lead telluride PbTe; ternary compounds, for example., tin selenide sulfide SnSeS, tin selenide telluride SnSeTe, tin sulfide telluride SnSTe, lead selenide sulfide PbSeS, lead selenide telluride PbSeTe, lead sulfide telluride PbSTe, tin lead sulfide SnPbS, tin lead selenide SnPbSe and tin lead telluride SnPbTe; and quaternary compounds, for example, tin lead sulfide selenide SnPbSSe, selenide lead selenide telluride SnPbSeTe and tin lead sulfide telluride SnPbSTe.

Exemplary Group IV semiconductor compounds include unary compounds, for example, silicon Si and germanium Ge; and binary compounds, for example, silicon carbide SiC and silicon germanium SiGe.

Where the plurality of stabilized quantum dots may be described as having a shell or a multi-shell structure (i.e., a core and at least one shell), the core and the shell or plurality of shells may independently be formed of the semiconductor materials described above.

The semiconductor nanocrystals may have a multilayer structure consisting of two or more layers composed of different materials. The multilayer structure of the semiconductor nanocrystals may include at least one alloy interlayer composed of two or more different materials at the interface between the adjacent layers. In one exemplary aspect, the alloy interlayer may be composed of an alloy having a composition gradient.

In yet other aspects the plurality of stabilized quantum dots including quantum dots stabilized by a combination of two or more of these features.

In some aspects one or more of the plurality of stabilized quantum dots is a metal nanomaterial or an inorganic nanomaterial. The form of the plurality of stabilized quantum dots may include in certain aspects a nanoparticle, a nanofiber, a nanorod, or a nanowire.

The plurality of stabilized quantum dots may have a size of from about 1 nanometer (nm) to about 100 nm in some aspects, or of from about 1 nm to about 50 nm in particular aspects.

### Scattering Materials

Scattering materials, which may include but are not limited to metal oxide particles, may be included in an extruded or other layer to modify the optical properties of the at least one extruded polymer layer. Exemplary scattering materials include, but are not limited to, titanium dioxide (TiO₂), silicon dioxide (SiO₂), aluminum oxide (Al₂O₃), zinc oxide (ZnO), zinc peroxide (ZnO₂), zirconium dioxide (ZrO₂), and combinations thereof. The scattering material in some aspects has a particle size of from about 0.1 micrometer (µm) to about 10 µm.

The at least one extruded polymer layer may in particular aspects include one or more optional additional additives, including but not limited to a dispersant, a scavenger, a stabilizer or a combination thereof. In particular, a scavenger may be provided to absorb oxygen and/or moisture, which could help to protect the stabilized quantum dot from damage in the presence thereof. Exemplary scavenger materials include, but are not limited to, oxygen scavengers such as hydrazine, Carbo-Hz, sodium sulfite, n,n-diethylhydroxylamine (DEHA), methylethyl ketone oxime (MEKO), erythorbate, hydroquinone, and combinations thereof, and moisture scavengers such as calcium oxide, magnesium oxide, strontium oxide, barium oxide, aluminum oxide, silicone oxide, and combinations thereof. The scavenger in some aspects has a particle size of from about 0.1 micrometer (µm) to about 10 µm.It should be understood that the presence of a scattering material (or scattering materials) is optional in the disclosed technology.

### Methods of Making QD Films

In certain aspects, film is formed by an extrusion process. This is in contrast to conventional quantum dot films that do not include stabilized quantum dots and that cannot be extruded because the quantum dots used in conventional quantum dot films would be damaged or destroyed by the thermal and mechanical stresses that are inherent to the extrusion process. The use of stabilized quantum dots in aspects of the disclosure enable extrusion processes for making the quantum dot films described herein. Extrusion offers a low-cost method for making high performance quantum dot films.

In such an extrusion process the one or any foregoing components described herein (including the stabilized quantum dots) may first be dry blended together, then fed into an extruder from one or multi-feeders, or separately fed into an extruder from one or multi-feeders. The one or any foregoing components may be first dry blended with each other, or dry blended with any combination of foregoing components, then fed into an extruder from one or multi-feeders, or separately fed into an extruder from one or multi-feeders. The components may be fed into the extruder from a throat hopper or any side feeders.

In some aspects one or more of the foregoing components described herein (including the stabilized quantum dots) may, prior to extrusion, be prepared as a quantum dot formulation. The quantum dot formulation may include the stabilized quantum dot particles and optional components including but not limited to a scattering material, a dispersant, a binder, a scavenger, a stabilizer and a combination thereof. The quantum dot formulation could be added to polymer and then fed into the extruder as described herein.

The extruders may have a single screw, multiple screws, intermeshing co-rotating or counter rotating screws, non-intermeshing co-rotating or counter rotating screws, reciprocating screws, conical screws, screws with pins, screws with screens, barrels with pins, rolls, rams, helical rotors, co-kneaders, disc-pack processors, various other types of extrusion equipment, or combinations comprising at least one of the foregoing.

The barrel temperature on the extruder during compounding can be set at the temperature where at least a portion of the polymer in the at least one extruded polymer layer has reached a temperature greater than or equal to about the melting temperature, if the polymer is a semi-crystalline organic polymer, or the flow point (e.g., the glass transition temperature) if the polymer is an amorphous polymer.

The mixture including the foregoing mentioned components may be subject to multiple blending and forming steps if desirable. For example, the composition may first be extruded and formed into pellets. The pellets may then be fed into a molding machine where it may be formed into any desirable shape or product. Alternatively, the composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive degradation of the components (e.g., the polymer in the at least one extruded polymer layer). In exemplary aspects, the melt temperature is maintained between about 121 deg. C and about 288 deg. C, or even between about 121 deg. C and about 232 deg. C. In some aspects the melt processed composition exits processing equipment such as an extruder through small exit holes in a die. The resulting strands of molten resin may be cooled by passing the strands through a water bath. The cooled strands can be chopped into small pellets for packaging and further handling.

A QD film may include a plurality of extruded polymer layers. Each of the plurality of extruded polymer layers includes a plurality of stabilized quantum dots as described above. The plurality of stabilized quantum dots in each of a plurality of extruded polymer layers may emit light having the same wavelength(s) as those in other of the extruded polymer layers or in some aspects each of the plurality of extruded polymer layers may include different types of stabilized quantum dots such that the stabilized quantum dots in one extruded polymer layer emit light having a wavelength that is different than the wavelength of light emitted by the stabilized quantum dots in another extruded polymer layer. Thus, for example, one or more of the extruded polymer layers may include stabilized quantum dots that emit green light, and one or more other extruded polymer layers may include stabilized quantum dots that emit red light. One or more of the plurality of extruded polymer layers may include texturing for modifying the optical properties of the quantum dot film, as desired.

In some aspects, a quantum dot film includes at least two extruded polymer layers wherein substantially all of the stabilized quantum dots in one of the extruded polymer layers emits light having a first wavelength, and substantially all of the stabilized quantum dots in another of the extruded polymer layers emits light having a second wavelength, and wherein the first wavelength is different than the second wavelength. As used herein, "substantially all of the stabilized quantum dots" means that (1) all of the stabilized quantum dots in the respective extruded polymer layer emit light having the first/second wavelength, or (2) a significant portion of the stabilized quantum dots in the respective polymer layer emit light having the first/second wavelength such that the light emitted from the stabilized quantum dots satisfies color standards for light at the respective wavelength.

Separation of different types of quantum dots in extruded polymer layers allows for an increase in quantum efficiency of the quantum dot film. Quantum dots that emit light at different wavelengths are susceptible to a phenomenon called Förster Resonance Energy Transfer (FRET), also referred to as fluorescence resonance energy transfer, in which non-radiative energy is transferred from a fluorescent donor (e.g., a quantum dot emitting light at a higher energy) to a lower energy acceptor (e.g., a quantum dot emitting light at a lower energy) through long-range dipole-dipole interactions. FRET can occur if two particles (e.g., quantum dots) are within about 20 nm of each other. In aspects of the present disclosure, FRET between quantum dots that emit light at different colors (e.g., red and green) is avoided by locating quantum dots that emit light at one color in one extruded polymer layer and locating quantum dots that emit light at a different color in another extruded polymer layer.

The plurality of extruded polymer layers described herein may be extruded in any suitable process. Examples include, but are not limited to, a co-extrusion process and a multi-layer extrusion (MLE) process.

In some aspects, the quantum dot film does not include a barrier layer such as those found in conventional quantum dot films. As a result, the quantum dot film may be made with fewer processes, and thinner quantum dot films can be made. These improvements reduce the cost of the quantum dot film and enhance the optical properties of the quantum dot film. In particular, in the case of quantum dot films including a plurality of extruded polymer layers, the plurality of extruded polymer layers are seamless (in contrast to conventional quantum dot films including one or more barrier layers), which further enhances the optical properties of the quantum dot film because light emitted by the stabilized quantum dots is not affected as it travels from one extruded polymer layer to the other.

### Properties of Stabilized Quantum Dots

The plurality of stabilized quantum dots included in quantum dot film according to aspects of the disclosure have improved properties as compared to quantum dots included in conventional quantum dot films. The plurality of stabilized quantum dots are one or more of thermally stabilized, air stabilized, moisture stabilized and flux stabilized.

In some aspects, the plurality of stabilized quantum dots are thermally stabilized such that the quantum dot film exhibits no appreciable degradation of optical properties at a temperature of at least about 40 degrees C. In further aspects, the plurality of stabilized quantum dots are thermally stabilized such that the quantum dot film exhibits no appreciable degradation of optical properties at a temperature of at least about 50 deg. C, or at a temperature of at least about 60 deg. C, or at a temperature of at least about 70 deg. C, or at a temperature of at least about 80 deg. C, or at a temperature of at least about 90 deg. C, or at a temperature of at least about 100 deg. C.

As used herein, "appreciable degradation of optical properties" means that, when the stabilized quantum dot is exposed to the stated condition, the emission spectra of the stabilized quantum dot either does not change or does not change to a substantial degree (e.g., the change is less than about 10%). Emission spectra of a quantum dot may be quantified by measuring the width of the Gaussian curve of the emission spectra at half of its maximum value, known as "full width at half maximum," or FWHM. Degradation of a quantum dot under adverse conditions such as those described herein can cause its FWHM to increase and its peak wavelength to shift, resulting in a change in optical properties. Thus, in some aspects an "appreciable degradation of optical properties" may include a change in FWHM of more than about 10% or a shift in peak wavelength of more than about 10%.

In certain aspects the plurality of stabilized quantum dots are air stabilized such that the quantum dot film exhibits no appreciable degradation of optical properties when exposed to air having a relative humidity of 95% and a temperature of 60 deg. C for 1000 hours.

In further aspects the plurality of stabilized quantum dots are moisture stabilized such that the quantum dot film exhibits no appreciable degradation of optical properties when exposed to air having a relative humidity of 95% and a temperature of 60 °C for 1000 hours.

In particular aspects the plurality of stabilized quantum dots are flux stabilized such that the quantum dot film exhibits no appreciable degradation of optical properties when exposed to an acceleration flux of 350 milliwatt per square centimeter (mW/cm²) for 100 hours.
In specific aspects the plurality of stabilized quantum dots are flux stabilized and thermal stabilized such that the quantum dot film exhibits no appreciable degradation of optical properties when exposed for 100 hours to an acceleration flux of 350 mW/cm² in air having a temperature of 60 °C

A quantum dot film formed from the disclosed optical composition may exhibit a greater luminance than a substantially similar QD film formed from a substantially similar optical composition in the absence of glass fiber. For example, a quantum dot film formed from the disclosed optical composition may exhibit a luminance that is about 5%, about 10%, or about 20 % greater than a substantially similar QD film formed from a substantially similar optical composition in the absence of glass fiber when tested at a film thickness of 150 using a spectroradiometer. As an example, luminance may be measured using a liquid crystal display backlight as a light source.

### Articles of Manufacture

Aspects of the disclosure also relate to an article including the quantum dot film (or films) described herein. In some aspects the article is a display, which display may be comprised in an electronic device. The electronic device may include but is not limited to a mobile device, a tablet device, a gaming system, a handheld electronic device, a wearable device, a television, a desktop computer, or a laptop computer. The quantum dot film may in particular aspects be used in multi-layer extrusion (MLE), micro lens, prism and diffuser applications.

Various combinations of elements of this disclosure are encompassed by this disclosure, e.g., combinations of elements from dependent claims that depend upon the same independent claim.

### Exemplary Embodiments

Embodiment 1A. An optical composition, comprising: a polymeric matrix material; a population of quantum dots dispersed within the polymeric matrix material; and a population of glass fiber segments dispersed within the polymeric matrix material, the glass fiber segments effecting reduced aggregation between the quantum dots.

Embodiment IB. An optical composition, consisting of: a polymeric matrix material; a population of quantum dots dispersed within the polymeric matrix material; and a population of glass fiber segments dispersed within the polymeric matrix material, the glass fiber segments effecting reduced aggregation between the quantum dots.

Embodiment 1C. An optical composition, consisting essentially of: a polymeric matrix material; a population of quantum dots dispersed within the polymeric matrix material; and a population of glass fiber segments dispersed within the polymeric matrix material, the glass fiber segments effecting reduced aggregation between the quantum dots.

A polymeric matrix material suitably comprises a thermoplastic, e.g., PC or PMMA. Other suitable thermoplastics include (without limitation), e.g., acrylics, ABS, polyamide, polylactic acid, polybenzimidazole, polyether sulfone, polyoxymethylene, polyetherether ketone, polyetherimide, polyethylene, polyphenylene oxide, polyphenylene sulfide, polypropylene, polystyrene, polyvinyl chloride, and the like. Polystyrene is also considered another suitable polymeric matrix material. Although thermoplastics are considered especially suitable, thermosets may also be used as matrix materials. Exemplary polymers include, but are not limited to, polycarbonate (PC), polyethylene terephthalate (PET), polymethyl methacrylate (PMMA), polyaryletherketones (PAEK), polybutylene terephthalate (PBT), cyclic olefin copolymer (COC), polyethylene naphthalate (PEN), poly(ether sulfone) PES, polyamide (PA), polyphthalamide (PPA), polyimides, polyolefins, polystyrene, and combinations thereof.

Embodiment 2. The optical composition of Embodiment 1, wherein the composition is present as a film. The film may be made by way of an extrusion process, but other film-forming processes may also be used.

Embodiment 3. The optical composition of Embodiment 2, wherein the film defines a thickness in the range of from about 100 to about 300 micrometers. Film thicknesses of from about 100 to about 300 micrometers, of from about 110 to about 290 micrometers, of from about 120 to about 280 micrometers, of from about 130 to about 270 micrometers, of from about 140 to about 260 micrometers, of from about 150 to about 250 micrometers, of from about 160 to about 240 micrometers, of from about 170 to about 230 micrometers, of from about 180 to about 220 micrometers, of from about 190 to about 230 micrometers, of from about 200 to about 220 micrometers are all suitable. Thicknesses of about 100, 105, 110, 115, 120, 125, 130, 125, 130, 135, 140, 145, 150, 155, 160, 165, 170, 175, 180, 185, 190, 195, 200, 210, 215, 220, 225, 230, 235, 240, 245, 250, 255, 260, 265, 270, 275, 280, 285, 290, 295, and about 300 micrometers are also suitable.

Embodiment 4. The optical composition of any of Embodiments 2-3, wherein the film is characterized as an extruded film. An extruded film may include one or more optional additional additives, including but not limited to a dispersant, a scavenger, a stabilizer or a combination thereof. In particular, a scavenger may be provided to absorb oxygen and/or moisture, which could help to protect the stabilized quantum dot from damage in the presence thereof. Exemplary scavenger materials include, but are not limited to, oxygen scavengers such as hydrazine, Carbo-Hz, sodium sulfite, n,n-diethylhydroxylamine (DEHA), methylethyl ketone oxime (MEKO), erythorbate, hydroquinone, and combinations thereof, and moisture scavengers such as calcium oxide, magnesium oxide, strontium oxide, barium oxide, aluminum oxide, silicone oxide, and combinations thereof. The scavenger in some aspects has a particle size of from about 0.1 micrometer (µm) to about 10 µm.

Embodiment 5. The optical composition of any of Embodiments 1-4, wherein the population of glass fiber segments has an average diameter of from about 1 micrometer to about 50 micrometers. Average diameters in the range of from about 1 to about 50 micrometers, of from about 5 to about 45 micrometers, of from about 10 to about 40 micrometers, of from about 15 to about 35 micrometers, of from about 20 to about 30 micrometers, or even about 25 micrometers are all considered suitable. Average diameters of about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or about 50 micrometers are all considered suitable.

Glass fiber may comprise, e.g., E-glass. Other suitable glasses for use in glass fiber include, e.g., A-glass, E-CR-glass, C-glass, D-glass, R-glass, and even S-glass or T-glass. Pure silica (silicon dioxide) may also be used.

Embodiment 6. The optical composition of any of Embodiments 1-5, wherein the population of glass fiber segments has an average length of, e.g., at least about 0.75 mm. A population of glass fiber segments may have an average length of, e.g., from about 0.75 to about 15 mm, or from about 1 to about 10 mm, or from about 2 to about 5 mm, or even about 3 to about 4 mm

Glass fiber may include a surface treatment thereon, e.g., polyvinyl acetate (PVAc). Glass fiber may also include a coupling agent, e.g., a silane coupling agent. Some silane coupling agents may have the structure Y-R-Si(X)₃, wherein Y denotes a functional group that links with organic materials, and R comprises a linker, e.g., an alkyl. Some examples of such a functional group are, e.g., vinyl, epoxy, amino groups, and the like. X may be a functional group that undergoes hydrolysis by water or moisture to form silanol, which silanol in turn links with inorganic materials. Exemplary choices for X include, e.g., chlorine, alkoxy, amine, and acetoxy groups.

Embodiment 7. The optical composition of any of Embodiments 1-6, wherein the optical composition is incorporated into a display device. Suitable such devices include, e.g., televisions, computer monitors, mobile devices, tablet computers, laptop computers, GPS devices, wearable monitors, landline phones, movie screens, projector screens, billboards, appliances, automotive monitors, and the like.

Embodiment 8. The optical composition of Embodiment 7, wherein at least a portion of the optical composition is exposed to the environment exterior to the optical composition. This may arise in embodiments where, e.g., the disclosed composition is present on the exterior surface of a display device. In some embodiments, the disclosed optical composition is at least partially surmounted by an optical diffusion layer. Such a diffusion layer may comprise a resin matrix material having particles disposed therein.

Embodiment 9. The optical composition of any of Embodiments 1-8, wherein the optical composition is essentially free of scattering particles. Exemplary scattering materials include, but are not limited to, titanium dioxide (TiO₂), silicon dioxide (SiO₂), aluminum oxide (Al₂O₃), zinc oxide (ZnO), zinc peroxide (ZnO₂), zirconium dioxide (ZrO2), and combinations thereof. The scattering material in some aspects has a particle size of from about 0.1 micrometer (µm) to about 10 µm.

Embodiment 10. The optical composition of any of Embodiments 1-9, wherein the population of quantum dots comprises a passivation layer (which may include one or more passivants) on the surfaces of the quantum dots. The passivant may facilitate passivation of the quantum dots to provide passivated quantum dots.

Embodiment 11. The optical composition of Embodiment 10, wherein a passivant comprises an organic ligand. Exemplary organic ligands are described elsewhere herein and include, e.g., thiol ligands and organic ligands having the form RCOOH, RNH₂, R₂NH, R₃N, RSH, R₃PO, R₃P, ROH, RCOOR', RPO(OH)₂, R₂POOH, RCOOCOR', and a combination thereof, wherein, each R and R' are independently a substituted or unsubstituted C1 to C24 aliphatic hydrocarbon group such as an alkyl group, an alkenyl group, or an alkynyl group, or a substituted or unsubstituted C5 to C24 aromatic hydrocarbon group, such as an aryl group.

Specific examples of an organic ligand compound may include methane thiol, ethane thiol, propane thiol, butane thiol, pentane thiol, hexane thiol, octane thiol, dodecane thiol, hexadecane thiol, octadecane thiol, benzyl thiol; methane amine, ethane amine, propane amine, butane amine, pentane amine, hexane amine, octane amine, dodecane amine, hexadecyl amine, octadecyl amine, dimethyl amine, diethyl amine, dipropyl amine, oleylamine, methanoic acid, ethanoic acid, propanoic acid, butanoic acid, pentanoic acid, hexanoic acid, heptanoic acid, octanoic acid, dodecanoic acid, hexadecanoic acid, octadecanoic acid, oleic acid, benzoic acid, palmitic acid, stearic acid; a phosphine such as methyl phosphine, ethyl phosphine, propyl phosphine, butyl phosphine, pentyl phosphine, tributylphosphine, or trioctylphosphine; a phosphine compound or an oxide compound thereof such as methyl phosphine oxide, ethyl phosphine oxide, propyl phosphine oxide, butyl phosphine oxide, or trioctylphosphine oxide; diphenyl phosphine, triphenyl phosphine or an oxide compound thereof; phosphonic acid, and the like, but are not limited thereto. The organic ligand compound may be used alone or as a mixture of two or more organic ligands. In some embodiments, the quantum dot does not include an amine organic ligand having an alkyl group of at least 6 carbon atoms, such as at least 8 carbon atoms (e.g., n-octyl amine).

Embodiment 12. The optical composition film of any of Embodiments 1-11, wherein the optical composition exhibits a green and/or red peak wavelength shift within about 3 nm of that of the QDs present in the optical solution, as measured using a fluorescence spectrophotometer, e.g. using an Agilent™ Cary Eclipse Fluorescence Spectrophotometer.

Embodiment 13. The optical composition of any of Embodiments 1-12, wherein the optical composition is characterized as having a quantum yield (QY) of at least about 70%, e.g., from about 70 to about 99%, from about 75 to about 95%, from about 80 to about 90% or even about 85%. QY values of 70, 71, 72, 73, 74, 75, 76, 77, 78, 79, 80, 81, 82, 83, 84, 85, 86, 87, 88, 89, 90, 91, 92, 93, 94, 95, 96, 97, 98, or even 99% are all suitable. QY may be measured by an absolute quantum yield machine, e.g., with a Hamamatsu™ Absolute PL quantum yield spectrometer.

Embodiment 14A. The optical composition of any of Embodiments 1-13, wherein the glass fiber segments represent from about 1 to about 50 wt% of the optical composition. Loading levels in the range of from about 1 to about 50 wt%, of from about 5 to about 45 wt%, of from about 10 to about 40 wt%, of from about 15 to about 35 wt%, of from about 20 to about 30 wt%, or even about 25 wt% are all considered suitable. Average diameters of about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or about 50 wt% are all considered suitable.

Embodiment 14B. The optical composition of any of Embodiments 1-13, wherein the glass fiber segments represent from about 5 to about 15 wt% of the optical composition, for example about 10 wt%.

Embodiment 15. The optical composition of any of Embodiments 1-14, wherein the population of quantum dots represents from about 0.1 to about 10 wt% of the optical composition. For example, the QDs may represent from about 0.1 to about 10 wt% of the optical composition, or from about 0.5 to about 9 wt% of the optical composition, or from about 1 to about 8.5 wt% of the optical composition, or from about 1.5 to about 7.5 wt% of the optical composition or from about 2 to about 7 wt% of the optical composition or from about 2.5 to about 6.5 wt% of the optical composition or from about 3 to about 6 wt% of the optical composition or from about 3.5 to about 5.5 wt% of the optical composition or from about 4.5 to about 5 wt% of the optical composition.

Embodiment 16. The optical composition of any of Embodiments 1-15, wherein at least a portion of the population of glass fiber segments is characterized as aligned with one another. In some embodiments, the major axes of the glass fiber segments contained within a 50 x 50 x 50 micrometer segment of the optical composition are all aligned within about 1 to about 45 degrees of a common line. In some embodiments, such major axes are all aligned within about 5 to about 40 degrees of a common line, or even from about 10 to about 35 degrees of the common line, or even from about 15 to about 30 degrees of the common line.

Embodiment 17. The optical composition of any of Embodiments 1-16, wherein the optical composition is characterized as having a full width at half maximum (FWHM) value at peak emission wavelength (PWL) of less than about 100 nm, less than about 90 nm, less than about 80 nm, less than about 70 nm, less than about 60 nm, or even less than about 50 nm, less than about 40 nm, or even less than about 30 nm, or less than about 20 nm or even less than about 10 nm. In some embodiments, the FWHM at PWL is about 100 nm, about 90 nm, about 80 nm, about 70 nm, about 60 nm, about 50 nm, about 40 nm, about 30 nm, about 20 nm, or even about 10 nm. In some embodiments, the FWHM at PWL is from about 70 to about 50 nm or even to about 30 nm. In some embodiments, the FWHM at PWL is from about 50 nm to about 30 nm.

Embodiment 18. A method, comprising forming a film by extruding an optical composition according to any of Embodiments 1-17.

Embodiment 19. The method of Embodiment 18, wherein the extruded film has a thickness in the range of from about 100 to about 300 micrometers. Film thicknesses of from about 100 to about 300 micrometers, of from about 110 to about 290 micrometers, of from about 120 to about 280 micrometers, of from about 130 to about 270 micrometers, of from about 140 to about 260 micrometers, of from about 150 to about 250 micrometers, of from about 160 to about 240 micrometers, of from about 170 to about 230 micrometers, of from about 180 to about 220 micrometers, of from about 190 to about 230 micrometers, of from about 200 to about 220 micrometers are all suitable.

Thicknesses of about 100, 105, 110, 115, 120, 125, 130, 125, 130, 135, 140, 145, 150, 155, 160, 165, 170, 175, 180, 185, 190, 195, 200, 210, 215, 220, 225, 230, 235, 240, 245, 250, 255, 260, 265, 270, 275, 280, 285, 290, 295, and about 300 micrometers are all suitable.

Embodiment 20. A display device, the display device comprising an optical composition according to any of Embodiments 1-17 in optical communication with a source of illumination.

Embodiment 21. The display device of Embodiment 20, wherein the display device is characterized as a mobile computing device.

Embodiment 22. An optical composition, comprising: a polymeric matrix material; a population of quantum dots dispersed within the polymeric matrix material, wherein the population of quantum dots comprises a passivation layer on the surfaces of the quantum dots, wherein the passivation layer comprises a passivant; and a population of glass fiber segments dispersed within the polymeric matrix material, the glass fiber segments effecting reduced aggregation between the quantum dots, wherein the glass fiber segments represent from about 1 to about 50 wt% of the optical composition, and wherein the glass fiber segments has an average length of at least about 0.75 mm

Embodiment 23. The optical construction of Embodiment 22, wherein the passivant comprises an organic ligand having the form RCOOH, RNH₂, R₂NH, R₃N, RSH, R₃PO, R₃P, ROH, RCOOR', RPO(OH)₂, R2POOH, RCOOCOR', and a combination thereof, wherein, each R and R' are independently a substituted or unsubstituted C1 to C24 aliphatic hydrocarbon group such as an alkyl group, an alkenyl group, or an alkynyl group, or a substituted or unsubstituted C5 to C24 aromatic hydrocarbon group, such as an aryl group.

Embodiment 24. The optical construction of Embodiment 22, wherein the passivant comprises an organic ligand selected from one or more of methane thiol, ethane thiol, propane thiol, butane thiol, pentane thiol, hexane thiol, octane thiol, dodecane thiol, hexadecane thiol, octadecane thiol, benzyl thiol; methane amine, ethane amine, propane amine, butane amine, pentane amine, hexane amine, octane amine, dodecane amine, hexadecyl amine, octadecyl amine, dimethyl amine, diethyl amine, dipropyl amine, oleylamine, methanoic acid, ethanoic acid, propanoic acid, butanoic acid, pentanoic acid, hexanoic acid, heptanoic acid, octanoic acid, dodecanoic acid, hexadecanoic acid, octadecanoic acid, oleic acid, benzoic acid, palmitic acid, stearic acid; a phosphine such as methyl phosphine, ethyl phosphine, propyl phosphine, butyl phosphine, pentyl phosphine, tributylphosphine, or trioctylphosphine; a phosphine compound or an oxide compound thereof such as methyl phosphine oxide, ethyl phosphine oxide, propyl phosphine oxide, butyl phosphine oxide, or trioctylphosphine oxide; diphenyl phosphine, triphenyl phosphine or an oxide compound thereof; and phosphonic acid.

Embodiment 25. The optical construction of one of Embodiments 1-17, wherein a quantum dot film formed from the optical construction exhibits a luminance greater than a luminance of a substantially similar quantum dot film formed from a substantially similar optical construction in the absence of the glass fiber, when tested at a film thickness of 150 nm on a spectroradiometer.

### EXAMPLES

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Table 1 provides luminance of the disclosed optical film observed. The optical film comprised a polymer matrix of a blend of polycarbonate and polyester. The glass fiber content was 10 wt. % and the quantum dot content was 1 wt%. The ratio of green to red QDs was 1:1. Other conditions were as follows: melt-mixing at 300 °C for 2 minutes and hot pressing was 280 °C at 2 minutes. The incorporation of glass fiber increased luminance of the film. The sample including glass fiber exhibited an increase in luminance of more than 20% compared to the film without glass fiber. Film thickness was 150 µm.Luminance was measured using a liquid crystal display backlight (LCD) as a light source. The quantum dot film was loaded onto the LCD backlight and the light intensity converted by the film was measured by spectroradiometer.

**Table 1. Luminance of QD film with and without glass fiber.**

| | **Luminance ² (cd/m)** | **Green** | | **Red** | |
|---|---|---|---|---|---|
| | | **PWL(nm)** | **FWHM(nm)** | **PWL(nm)** | **FWHM(nm)** |
| **With glass fiber** | 385 | 541.0 | 29.2 | 634.3 | 28.8 |
| **Without glass fiber** | 300 | 541.1 | 30.2 | 634.8 | 28.6 |

For comparison, FIGS. 1A-1D present images of QD film samples having red or green quantum dots, both with and without glass fiber. As shown, glass fiber affects quantum dot dispersion. Quantum dots aggregate in the presence of glass fiber. Darker agglomerated areas in the images correspond to aggregated QDs.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims.

## Claims

1. An optical composition, comprising:
a polymeric matrix material;
a population of quantum dots dispersed within the polymeric matrix material; and
a population of glass fiber segments dispersed within the polymeric matrix material,
the glass fiber segments effecting reduced aggregation between the quantum dots.

2. The optical composition of claim 1, wherein the composition is present as a film.

3. The optical composition of claim 2, wherein the film defines a thickness in the range of from 100 to 300 micrometers.

4. The optical composition of any of claims 2-3, wherein the film is characterized as an extruded film.

5. The optical composition of any of claims 1-4, wherein the population of glass fiber segments has an average diameter of from 1 micrometer to 50 micrometers.

6. The optical composition of any of claims 1-5, wherein the population of glass fiber segments has an average length of at least 0.75 mm.

7. The optical composition of any of claims 1-6, wherein the optical composition is essentially free of scattering particles.

8. The optical composition of any of claims 1-7, wherein the population of quantum dots comprises a passivation layer on surfaces of the quantum dots, wherein the passivation layer comprises a passivant.

9. The optical composition of claim 8, wherein the passivant comprises an organic ligand.

10. The optical composition of any of claims 1-9, wherein the optical composition exhibits a green and red peak wavelength shift of within 3 nm of a QD well dispersed solution.

11. The optical composition of any of claims 1-10, wherein the optical composition is characterized as having a quantum yield of at least 70%.

12. The optical composition of any of claims 1-11, wherein the glass fiber segments represent from 1 to 50 wt% of the optical composition.

13. The optical composition of any of claims 1-12, wherein the population of quantum dots represents from 0.1 to 10 wt% of the optical composition.

14. The optical composition of any of claims 1-13, wherein at least a portion of the population of glass fiber segments is characterized as aligned with one another.

15. A display device, the display device comprising an optical composition according to any of claims 1-14 in optical communication with a source of illumination.

## Patentansprüche

1. Optische Zusammensetzung, die Folgendes umfasst:
einen Polymermatrixwerkstoff;
eine Population von Quantenpunkten, die innerhalb des Polymermatrixwerkstoffs dispergiert sind; und
eine Population von Glasfasersegmenten, die innerhalb des Polymermatrixwerkstoffs dispergiert sind, wobei die Glasfasersegmente eine verringerte Aggregation zwischen den Quantenpunkten bewirken.

2. Optische Zusammensetzung nach Anspruch 1, wobei die Zusammensetzung als ein Film vorhanden ist.

3. Optische Zusammensetzung nach Anspruch 2, wobei der Film eine Dicke in dem Bereich von 100 bis 300 Mikrometern definiert.

4. Optische Zusammensetzung nach einem der Ansprüche 2-3, wobei der Film als ein extrudierter Film gekennzeichnet ist.

5. Optische Zusammensetzung nach einem der Ansprüche 1-4, wobei die Population von Glasfasersegmenten einen durchschnittlichen Durchmesser von 1 Mikrometer bis 50 Mikrometern aufweist.

6. Optische Zusammensetzung nach einem der Ansprüche 1-5, wobei die Population von Glasfasersegmenten eine durchschnittliche Länge von wenigstens 0,75 mm aufweist.

7. Optische Zusammensetzung nach einem der Ansprüche 1-6, wobei die optische Zusammensetzung im Prinzip frei von streuenden Teilchen ist.

8. Optische Zusammensetzung nach einem der Ansprüche 1-7, wobei die Population von Quantenpunkten eine Passivschicht auf Oberflächen der Quantenpunkte umfasst, wobei die Passivschicht ein Passivierungsmittel umfasst.

9. Optische Zusammensetzung nach Anspruch 8, wobei das Passivierungsmittel einen organischen Liganden umfasst.

10. Optische Zusammensetzung nach einem der Ansprüche 1-9, wobei die optische Zusammensetzung eine Verschiebung einer Spitzenwellenlänge für grün und rot innerhalb von 3 nm einer gut dispergierten QD-Lösung zeigt.

11. Optische Zusammensetzung nach einem der Ansprüche 1-10, wobei die optische Zusammensetzung als eine Quantenausbeute von wenigstens 70 % aufweisend gekennzeichnet ist.

12. Optische Zusammensetzung nach einem der Ansprüche 1-11, wobei die Glasfasersegmente von 1 bis 50 Gew.-% der optischen Zusammensetzung ausmachen.

13. Optische Zusammensetzung nach einem der Ansprüche 1-12, wobei die Population von Quantenpunkten von 0,1 bis 10 Gew.-% der optischen Zusammensetzung ausmacht.

14. Optische Zusammensetzung nach einem der Ansprüche 1-13, wobei wenigstens ein Anteil der Population von Glasfasersegmenten als miteinander ausgerichtet gekennzeichnet ist.

15. Anzeigevorrichtung, wobei die Anzeigevorrichtung eine optische Zusammensetzung nach einem der Ansprüche 1-14 in optischer Kommunikation mit einer Beleuchtungsquelle umfasst.

## Revendications

1. Composition optique, comprenant :
un matériau de matrice polymère ;
une population de points quantiques dispersés à l'intérieur du matériau de matrice polymère ; et
une population de segments de fibres de verre dispersés à l'intérieur du matériau de matrice polymère,
les segments de fibres de verre effectuant une agrégation réduite entre les points quantiques.

2. Composition optique selon la revendication 1, dans laquelle la composition est présente sous forme de film.

3. Composition optique selon la revendication 2, dans laquelle le film définit une épaisseur dans la plage de 100 à 300 micromètres.

4. Composition optique selon l'une quelconque des revendications 2 à 3, dans laquelle le film est caractérisé comme film extrudé.

5. Composition optique selon l'une quelconque des revendications 1 à 4, dans laquelle la population de segments de fibres de verre a un diamètre moyen de 1 micromètre à 50 micromètres.

6. Composition optique selon l'une quelconque des revendications 1 à 5, dans laquelle la population de segments de fibres de verre a une longueur moyenne d'au moins 0,75 mm.

7. Composition optique selon l'une quelconque des revendications 1 à 6, dans laquelle la composition optique est essentiellement exempte de particules de diffusion.

8. Composition optique selon l'une quelconque des revendications 1 à 7, dans laquelle la population de points quantiques comprend une couche de passivation sur des surfaces des points quantiques, la couche de passivation comprenant un passivant.

9. Composition optique selon la revendication 8, dans laquelle le passivant comprend un ligand organique.

10. Composition optique selon l'une quelconque des revendications 1 à 9, dans laquelle la composition optique présente un décalage de longueur d'onde de pic vert et rouge inférieur à 3 nm d'une solution de PQ bien dispersée.

11. Composition optique selon l'une quelconque des revendications 1 à 10, dans laquelle la composition optique est **caractérisée** comme ayant un rendement quantique d'au moins 70 %.

12. Composition optique selon l'une quelconque des revendications 1 à 11, dans laquelle les segments de fibres de verre représentent de 1 à 50 % en poids de la composition optique.

13. Composition optique selon l'une quelconque des revendications 1 à 12, dans laquelle la population de points quantiques représente de 0,1 à 10 % en poids de la composition optique.

14. Composition optique selon l'une quelconque des revendications 1 à 13, dans laquelle au moins une partie de la population de segments de fibres de verre est **caractérisée** comme étant alignés les uns avec les autres.

15. Dispositif d'affichage, le dispositif d'affichage comprenant une composition optique selon l'une quelconque des revendications 1 à 14 en communication optique avec une source d'éclairage.
